# FASCICULE DE BREVET EUROPEEN

(11) **EP 1 723 733 B1**
(45) Date de publication et mention de la délivrance du brevet: **27.10.2010**
(21) Numéro de dépôt: 05736987.8
(22) Date de dépôt: 07.03.2005
(51) Int. Cl.: H04B 3/56

(54) **CIRCUIT DE COUPLAGE POUR INTERFACE DE SYSTEME DE TRANSMISSION D'INFORMATIONS PAR COURANTS PORTEURS**
KOPPELSCHALTUNG FÜR EINE TRÄGERSTROM-DATENÜBERTRAGUNGS-SYSTEMSCHNITTSTELLE
COUPLING CIRCUIT FOR A CARRIER CURRENT DATA TRANSMISSION SYSTEM INTERFACE

(30) Priorité: 08.03.2004 FR 0450468
(43) Date de publication de la demande: 22.11.2006
(73) Titulaire: Manufacture d'Appareillage Electrique de Cahors, 46000 Cahors (FR)
(72) Inventeur: IZARD, Pierre, F-46090 Pradines (FR); GODET, Arnaud, F-46140 Douelle (FR)
(74) Mandataire: Novagraaf Technologies
(86) Numéro de dépôt international: PCT/FR2005/000536
(87) Numéro de publication internationale: WO 2005/088857

(56) Documents cités:
- DE-A- 2 830 151
- US-B1- 6 671 501

## Description

La présente invention concerne un circuit de couplage pour interface de système de transmission d'informations par courants porteurs, et plus particulièrement un tel circuit de couplage comprenant un amplificateur d'émission et un circuit secondaire de transformateur de couplage connecté en parallèle sur une ligne d'énergie électrique.

On connaît des circuits de couplage de ce type dans lesquels la sortie de l'amplificateur d'émission est en série avec le circuit primaire du transformateur par l'intermédiaire d'une résistance. Le circuit de réception du circuit de couplage est connecté entre cette résistance et le primaire du transformateur.

On a toutefois constaté qu'un tel montage n'était pas optimal. En premier lieu, il ne permet pas en effet d'obtenir le maximum de signal sur les charges faibles (inférieures à 2 ohms). Par ailleurs, le courant de sortie généré par l'amplificateur opérationnel d'émission est encore relativement élevé de même par conséquent que le courant consommé au niveau de l'alimentation du primaire.

Par ailleurs, on connaît du document US 6 671 501 un circuit de transmission de signal dans lequel un condensateur est disposé en parallèle aux circuits secondaires, ce condensateur formant un circuit de résonance large bande. Cependant un tel circuit ne permet pas d'obtenir de signal maximal sur les charges faibles.

De même ce but n'est pas atteint dans le document DE 2830151 qui décrit un transformateur dont le condensateur série du circuit secondaire est un condensateur de couplage. Ce condensateur nécessite une compensation de la puissance par un apport d'enroulements additionnels afin d'obtenir le couplage souhaité.

La présente invention vise à palier ces inconvénients.

À cet effet, l'invention a tout d'abord pour objet un cicuit de couplage pour interfaces de système de transmission d'informations par courants porteur suivant la revendication 1.

Dans un mode de réalisation particulier, une résistance a une de ses bornes connectée entre la sortie de l'amplificateur d'émission et le condensateur, et son autre borne à la masse, le circuit de réception du circuit de couplage ayant son entrée au point commun à la sortie de l'amplificateur d'émission, au condensateur et à ladite résistance.

Egalement dans un mode de réalisation particulier, le transformateur de couplage possède un rapport de transformation primaire/secondaire supérieur ou égal à trois, notamment de l'ordre de quatre.

Dans le cas où la transmission par courants porteurs s'effectue sur une ligne électrique triphasée, le circuit secondaire du transformateur de couplage peut comporter trois sorties, chacune de ces sorties étant connectée en parallèle sur une phase de la ligne, par rapport au point commun connecté au neutre.

Dans un autre mode de réalisation, le circuit comprend trois transformateurs de couplage, le circuit secondaire de chaque transformateur de couplage étant connecté en parallèle sur une phase de la ligne électrique triphasée, par rapport au point commun connecté au neutre.

Dans ce dernier cas, on peut prévoir un condensateur en série avec l'amplificateur d'émission et le circuit primaire de chacun des transformateurs de couplage.

La présente invention a également pour objet un système de télérelève d'équipements de comptage tels que des compteurs, des collecteurs d'index, des interfaces radio..., ce système comprenant :
- au moins un bus de téléreport auquel est raccordé au moins un équipement à relever, pour transmettre par ledit bus des informations relatives audit équipement ;
- une interface d'entrée entre ledit bus de téléreport et une ligne d'énergie électrique, ladite interface comprenant un premier circuit de couplage pour transmettre par courants porteurs lesdites informations sur la ligne d'énergie ;
- un concentrateur comprenant un deuxième circuit de couplage pour sa connexion à ladite ligne d'énergie électrique et au moins une interface de sortie pour la récupération desdites informations ;
- ledit concentrateur étant agencé pour recevoir et mémoriser lesdites informations sous la forme d'équipements et d'interfaces d'entrée simulés correspondant aux équipements et aux interfaces réels du système, un bus de téléreport simulé reliant lesdits équipements et interfaces d'entrée simulés à ladite interface de sortie ;
- au moins l'un desdits premier et deuxième circuits de couplage étant tels que décrit ci-dessus.

Dans un mode de réalisation particulier, l'interface d'entrée comporte une fonction interne de comptage, par exemple de l'énergie électrique, et peut être dénommée compteur interface. Ladite interface d'entrée est agencée pour transmettre aussi par courants porteurs les informations relatives à ladite fonction interne de comptage.

Egalement dans un mode de réalisation particulier, l'interface d'entrée comporte une fonction interne de comptage, par exemple de l'énergie électrique, mais ne comporte pas de sortie bus de téléreport, et peut être dénommée compteur courant porteur. Ladite interface d'entrée est agencée pour transmettre aussi par courants porteurs les informations relatives à ladite fonction interne de comptage.

Bien entendu, ces modes de réalisation particuliers ne sont pas exclusifs et le système de relève peut comporter une combinaison des interfaces d'entrées décrites dans chaque mode de réalisation.

Bien entendu, un tel système de télérelève peut également comporter des circuits de couplage conventionnels.

L'interface de sortie peut être une interface de bus de téléreport. Cette interface de sortie peut également être une interface de réseau téléphonique (commuté, GMS...), ou une interface de réseau LAN ETHERNET.

Dans un mode de réalisation particulier, le concentrateur est agencé pour, lors de son installation, détecter les interfaces d'entrée présentes sur ladite ligne d'énergie électrique et les équipements raccordés au bus de téléreport de ces interfaces, et pour créer des équipements et interfaces simulés correspondants.

Egalement dans un mode de réalisation particulier, ladite interface d'entrée et ledit concentrateur comprennent des interrupteurs de configuration aptes à associer matériellement l'interface d'entrée à un concentrateur prédéterminé.

On décrira maintenant à titre d'exemples non limitatifs un mode de réalisation de l'invention en références aux dessins schématiques annexés dans lesquels :
- la figure 1 est une représentation d'ensemble d'un système selon l'invention ;
- la figure 2 est un schéma par blocs d'une interface d'entrée de ce système ;
- la figure 3 est un schéma par blocs d'un concentrateur de ce système ;
- la figure 4 est un schéma électrique du circuit de couplage de l'interface de la figure 2 ;
- la figure 5 est un schéma électrique du circuit de couplage du concentrateur de la figure 3 ;
- la figure 6 illustre le fonctionnement du concentrateur de la figure 3 ; et
- la figure 7 est une variante du circuit de couplage de la figure 5.

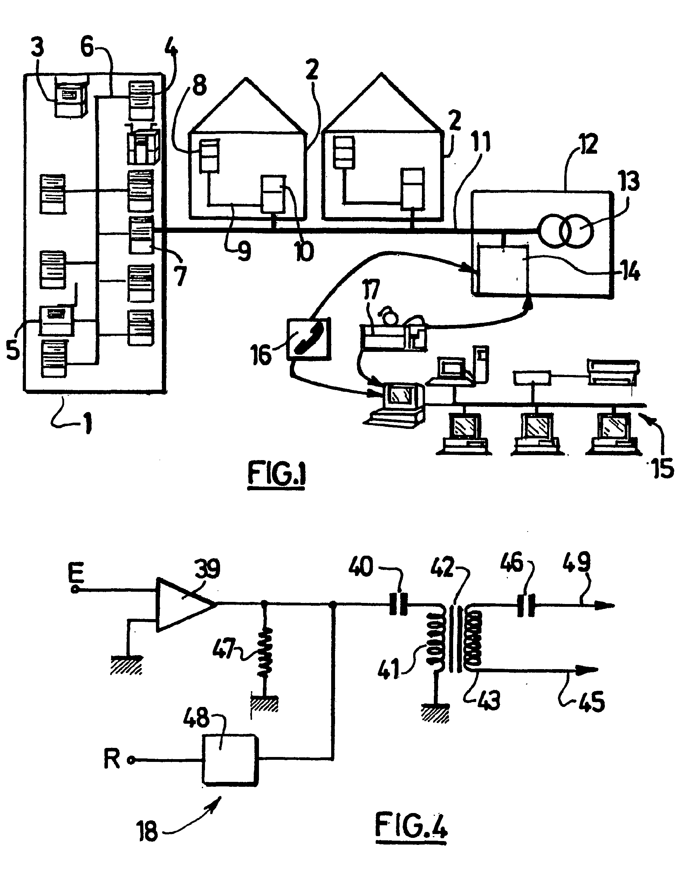

On voit schématisé à la figure 1 un immeuble d'habitation 1 et deux maisons individuelles 2.

Dans l'immeuble 1 sont installés un certain nombre de compteurs à gaz et de transpondeurs 3, de compteurs d'électricité 4, d'interfaces radio 5 ou encore de compteurs d'eau. Les compteurs d'électricité et les interfaces radio sont reliés par un bus EURIDIS 6, ce bus 6 étant lui-même connecté à une interface 7. De même, chaque maison individuelle est équipée d'un compteur électrique 8 relié par un bus EURIDIS 9 à une interface 10.

Les interfaces 7 et 10 assurent l'interface entre les bus 6 et 9 et le réseau électrique basse tension 11 de la manière qui sera décrite ci-après. Le circuit basse tension 11 est alimenté à partir d'un poste de transformation moyenne tension / basse tension 12 contenant le transformateur moyenne tension / basse tension 13 et un concentrateur 14 formant interface entre le réseau basse tension 11 et des moyens de transmission des informations circulant sur le réseau 11 vers une agence de traitement 15.

Ces moyens de transmission comprennent en premier lieu un réseau téléphonique 16, par exemple le réseau commuté ou un réseau GSM, et dans le cas présent un terminal de saisie portable 17 de type connu. L'un ou l'autre de ces moyens peut être utilisé, l'un d'entre eux ayant une priorité.

Les informations provenant des compteurs et des interfaces radio ainsi que les instructions de programmation ou de paramétrage qui leur sont destinés circulent sur les bus EURIDIS 6, 9 selon le protocole propre à ce type de bus. Les interfaces 7, 10 assurent la transmission de ces informations et instructions vers et depuis le réseau basse tension 11 où elles sont transmises conformément au protocole PLAN défini par les normes EN61334.

Au niveau du poste 12, le concentrateur 14 assure la transmission de ces informations et instructions vers et depuis le réseau téléphonique 16 suivant un protocole propre à ce réseau, par exemple le protocole PRACDIS, ou vers le terminal de saisie portable 17 suivant le protocole EURIDIS.

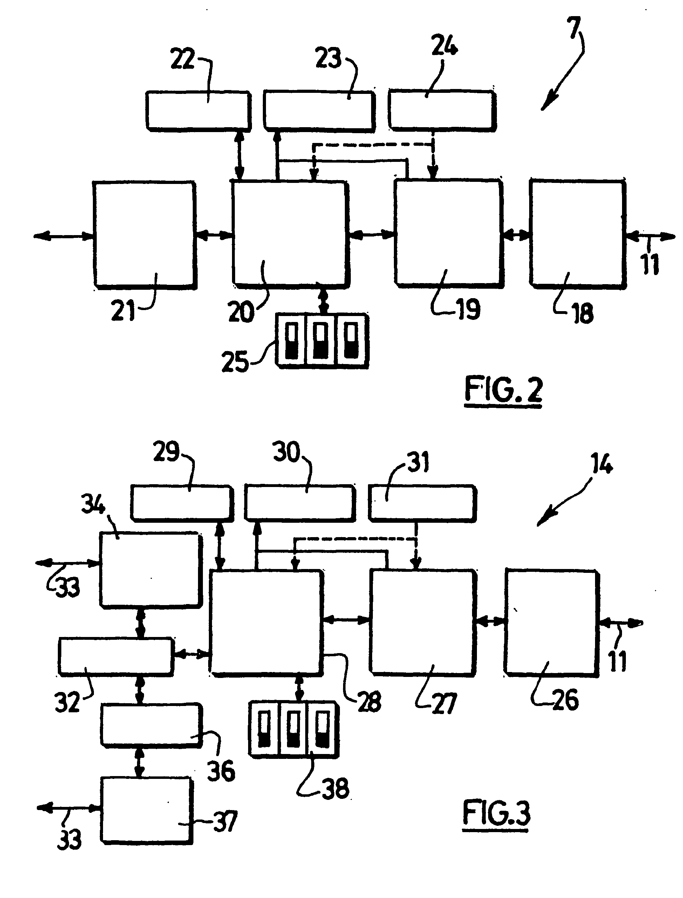

Si l'on se réfère maintenant à la figure 2, on voit une interface d'entrée bus / ligne d'énergie tel que 7.

L'interface 7 comprend un circuit de couplage 18 avec le réseau basse tension. Le circuit de couplage comporte, comme on le verra ci-après, un circuit d'émission (filtrage et amplification) un circuit de réception (filtrage) ainsi que le circuit de couplage secteur proprement dit.

L'interface 7 comporte par ailleurs un modem 19 qui gère notamment les couches basses du protocole courants porteurs, un microcontrôleur 20 qui intègre de manière logicielle les couches hautes du protocole courants porteurs ainsi que le protocole EURIDIS station primaire 21. Un circuit de sauvegarde permanente 22 est commandé par le microcontrôleur et un ensemble de visualisation 23 est également activé par le microcontrôleur et le circuit modem 19. L'interface comprend en outre un circuit d'alimentation 24.

Enfin, des interrupteurs de configuration 25 permettent d'affecter l'interface 7 à un concentrateur 14 particulier afin d'éviter les couplages parasites entre réseaux voisins.

On décrira maintenant un concentrateur 14 en référence à la figure 3.

Le concentrateur 14 comprend d'abord un circuit de couplage triphasé 26 assurant le couplage avec les trois phases basse tension du réseau 11. Ce circuit de couplage sera décrit ci-après.

Le concentrateur 14 comprend par ailleurs un modem 27 qui gère notamment les couches basses du protocole courants porteurs un microcontrôleur 28 qui intègre de manière logicielle les couches hautes du protocole courants porteurs, le protocole EURIDIS station secondaire, ainsi que le protocole de communication avec le réseau téléphonique. Un circuit de sauvegarde permanente 29 est commandé par le microcontrôleur 28 qui active par ailleurs un ensemble de visualisation 30 en coopération avec le modem 27.

Un circuit d'alimentation 31, par exemple identique au circuit 24 de l'interface d'entrée 7 assure l'alimentation du concentrateur 14. Un circuit de commutation 32 permet de relier la sortie série du microcontrôleur 28 soit à un bus EURIDIS 33 par l'intermédiaire du circuit d'émission / réception station secondaire EURIDIS 34, soit au réseau téléphonique par exemple au réseau commuté 35 par l'intermédiaire d'un modem 36 et d'un circuit de couplage 37.

Enfin des interrupteurs de configuration 38 permettent d'affecter de façon prédéterminée un certain nombre d'interfaces telles que 7 et 10 au concentrateur 14.

Si l'on se réfère maintenant à la figure 4, on voit le circuit de couplage 18 de l'interface 7.

Le circuit de couplage 18 comprend un amplificateur opérationnel d'émission 39 recevant le signal d'émission E. La sortie de l'amplificateur 39 est mise en série avec un condensateur 40 et le circuit primaire 41 du transformateur de couplage 42.

Le circuit secondaire 43 du transformateur est connecté en parallèle sur le réseau basse tension entre une phase 44 et le neutre 45. Une capacité 46 en série avec le circuit secondaire 43 du transformateur 42 assure le filtrage de la composante 50 Hz du réseau.

Par ailleurs, une résistance 47 est connectée entre la sortie de l'amplificateur 39 et la masse, et un circuit de réception et de filtrage 48 a son entrée connectée au point commun entre l'amplificateur 39, le condensateur 40 et la résistance 47 et sa sortie fournit le signal de réception R au modem 19.

On observera qu'il n'y a aucune résistance en série entre l'amplificateur opérationnel 39 et le réseau basse tension, à l'exception de la résistance parasite du transformateur 42.

On règle par la valeur de la capacité du condensateur 40 la résonance du filtre série constitué par ce condensateur en série avec l'inductance de fuite du transformateur et la capacité du condensateur de filtrage 46.

Le transformateur 42 possède ici un rapport de transformation primaire/secondaire de l'ordre de quatre. Il comporte par ailleurs une résistance parasite qui, ramenée au primaire, permet à l'amplificateur 39 de pouvoir générer de manière simple le courant sur le condensateur 40 en cas de court-circuit complet de la sortie. Ce condensateur 40 permet de couper la composante continue du courant de polarisation de l'amplificateur opérationnel 39 et d'éviter la saturation du transformateur.

On peut en outre installer un réseau RC en parallèle sur le circuit primaire 41 du transformateur 42. On peut également installer un filtre RC de sortie en parallèle du circuit secondaire 43 du transformateur 42 pour filtrer les harmoniques et le bruit généré dans les bandes de fréquence où cela est imposé, notamment par les normes.

L'amplificateur opérationnel d'émission 39 est un amplificateur à contre-réaction en courant qui permet de générer le signal de sortie au primaire avec un niveau d'harmoniques peu important même sur les impédances de sortie faible. L'amplificateur 39 est muni d'une entrée qui commande sa mise hors service lorsqu'on est en attente de réception.

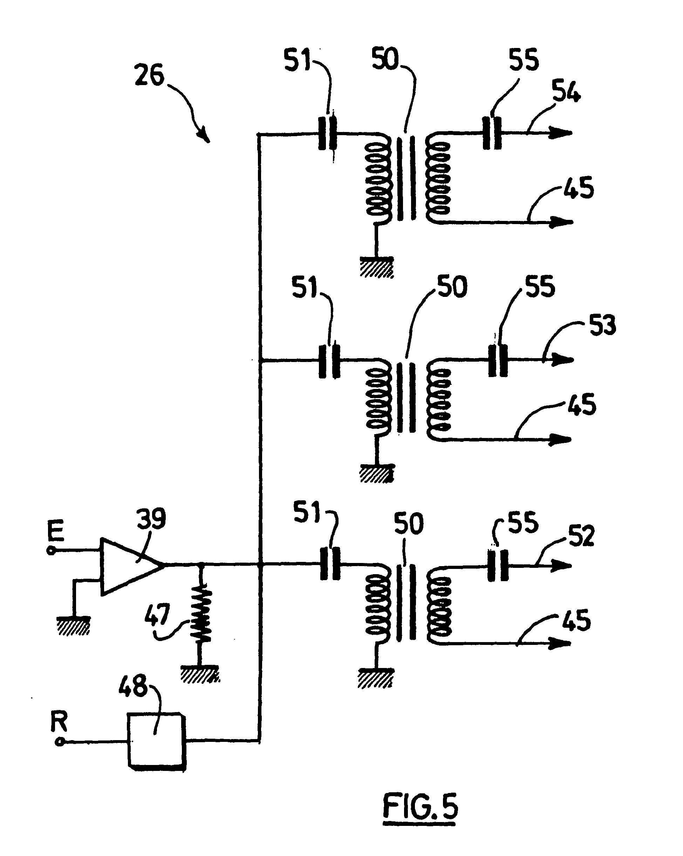

On décrira maintenant en référence à la figure 5, le circuit de couplage triphasé 26 du concentrateur 14.

Ce circuit 26 est similaire au circuit de couplage monophasé 18 de la figure 4, si ce n'est qu'il possède trois transformateurs de couplage 50 reliés entre eux au niveau des condensateurs de découplage continu du primaire 51, homologues du condensateur 40 de la figure 4.

Les secondaires de chaque transformateur sont connectés d'un côté sur chaque phase 52, 53, 54 par l'intermédiaire de capacités 55 de découplage de la composante 50Hz du réseau, homologues de la capacité 46. De l'autre côté, les secondaires de chaque transformateur sont reliés en point commun et connectés au neutre 45.

En revanche, le circuit triphasé 26 comporte un seul circuit d'émission et un seul circuit de réception identiques aux circuits d'émission et de réception de la figure 4 et qui ne seront donc pas décrits ci-après.

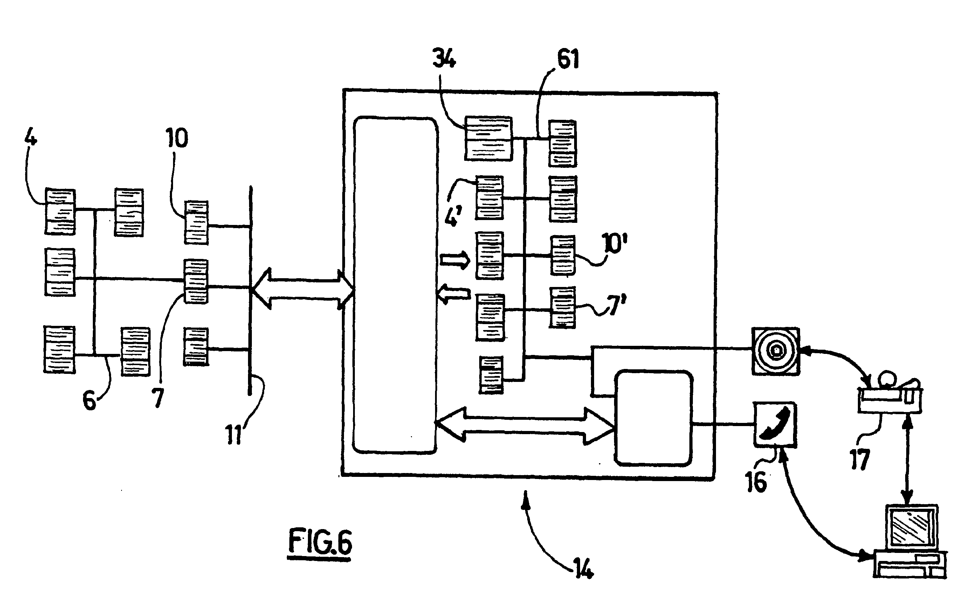

La figure 6 illustre le fonctionnement du concentrateur 14.

Lorsqu'un concentrateur est installé et connecté au réseau basse tension 11, il déclenche une procédure de découverte initiale pour recenser l'ensemble des interfaces telles que 7 et 10 présentes sur le réseau. Au fur et à mesure, il enregistre ces interfaces et leur attribue une adresse.

La procédure d'enregistrement s'accompagne de la création de stations EURIDIS simulées conformément au protocole. Une telle station est créée pour chaque interface telle que 7, 10, et pour chaque compteur tel que 4 détecté sur le bus local 6 au niveau de chaque interface. Les données des compteurs sont recopiées.

Par ailleurs, un bus EURIDIS simulé 61 est crée auquel sont reliées les interfaces simulées telles que 7', 10' les compteurs simulés tel que 4' et la station EURIDIS réelle 34 du concentrateur 14.

Les stations simulées ont un comportement similaire à celui de stations réelles.

Comme on l'a vu précédemment l'accès au bus local du concentrateur est réalisé soit par un terminal de saisie portable 17 soit par le réseau téléphonique commuté 16. On observera que par le terminal 17, il n'est possible de relever et de programmer que des stations simulées. En revanche, le protocole PRACDIS autorise la relève des compteurs réels par l'intermédiaire de l'application PLAN du concentrateur. Enfin, la programmation des compteurs par le réseau téléphonique est adressée exclusivement aux stations réelles.

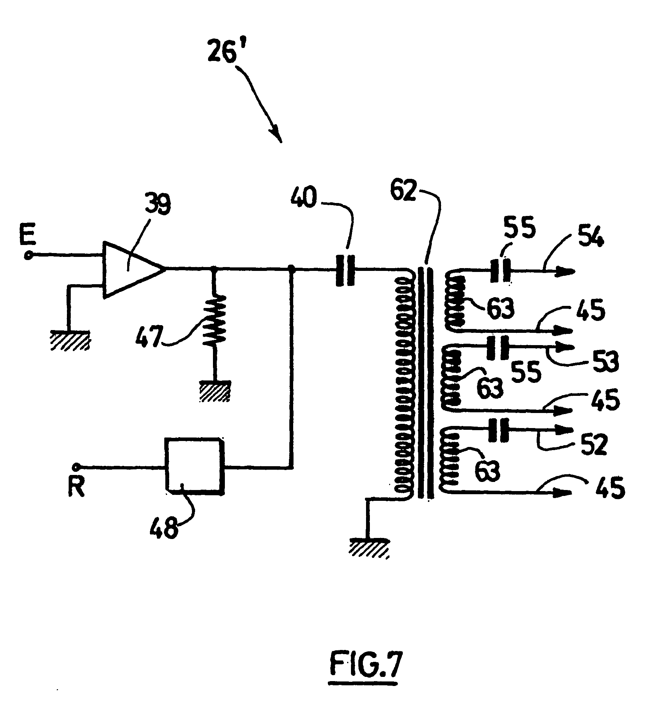

On a enfin représenté à la figure 7 une variante 26' du circuit de couplage triphasé du concentrateur 14.

On utilise ici un seul transformateur 62 à trois bobinages secondaires 63. Même si l'indépendance des signaux générés sur chaque phase n'est pas aussi bonne que dans le cas de la figure 5, ce mode de réalisation est moins onéreux et moins encombrant.

## Revendications

1. Circuit de couplage pour interface de système de transmission d'informations par courants porteurs, comprenant :
- un amplificateur d'émission (39) et
- un circuit secondaire (43) d'un transformateur de couplage (42,50) connecté en parallèle sur une ligne d'énergie électrique, le circuit comprend, en série avec l'amplificateur d'émission et le circuit primaire du transformateur,
- un condensateur (40,51) et sensiblement aucune résistance,
- le rapport de transformation primaire/secondaire du transformateur étant supérieur ou égal a trois, notamment de l'ordre de quatre :
le circuit comporte :
- une résistance (47) ayant une de ses bornes connectée entre la sortie de l'amplificateur d'émission et le condensateur et son autre borne connectée à la masse, le circuit de réception (48) du circuit de couplage ayant son entrée au point commun à la sortie de l'amplificateur d'émission, au condensateur et à ladite résistance.

2. Circuit selon la revendication 1, dans lequel ledit circuit secondaire (63) du transformateur de couplage (62) comporte trois sorties, chacune de ces sorties étant connectée en parallèle sur une phase (52,53, 54) d'une ligne d'énergie électrique triphasée par rapport au point commun connecté au neutre (45).

3. Circuit selon la revendication 1, comportant trois transformateurs de couplage (50), le circuit secondaire de chaque transformateur de couplage étant connecté en parallèle sur une phase (52,53,54) d'une ligne d'énergie électrique triphasée par rapport au point commun au neutre (45).

4. Circuit selon la revendication 3, comprenant un condensateur (51) en série avec l'amplificateur d'émission et le circuit primaire de chacun des transformateurs de couplage.

5. Système de télé relevé d'équipements de comptage, **caractérisé par le fait qu'**il comprend:
- au moins un bus de téléreport (6) auquel est raccordé au moins un équipement (4,5) à relever, pour transmettre par ledit bus des informations relatives audit équipement;
- une interface d'entrée (7) entre ledit bus de téléreport et une ligne d'énergie électrique (11), ladite interface comprenant un premier circuit de couplage (18) pour transmettre par courants porteurs lesdites informations sur ladite ligne d'énergie électrique;
- un concentrateur (14) comprenant un deuxième circuit de couplage (26,26') pour sa connexion à ladite ligne d'énergie électrique et au moins une interface de sortie (34,37) pour la récupération desdites informations;
- ledit concentrateur étant agencé pour recevoir et mémoriser lesdites informations sous la forme d'équipements (4') et d'interfaces d'entrée simulés (7', 10') correspondant aux équipements et aux interfaces réels du système, un bus de telereport simulé (61) reliant lesdits équipements et interfaces d'entrée simulés à ladite interface de sortie;
- au moins l'un desdits premier et deuxième circuits de couplage étant conforme à l'une quelconque des revendications 1 à 4.

6. Système selon la revendication 5, dans lequel ladite interface de sortie est une interface de bus de telereport.

7. Système selon la revendication 5, dans lequel ladite interface de sortie est une interface de réseau téléphonique.

8. Système selon la revendication 5, dans lequel ladite interface de sortie est une interface de réseau LAN Ethernet.

9. Système selon l'une quelconque des revendications 6 à 9, dans lequel le concentrateur est agencé pour, lors de son installation, détecter les interfaces d'entrée présentes sur ladite ligne d'énergie électrique et les équipements raccordes aux bus de téléreport de ces interfaces, et pour créer les équipements et interfaces simulés correspondants.

10. Système selon l'une quelconque des revendications 6 à 10, dans lequel ladite interface d'entrée et ledit concentrateur comprennent des interrupteurs de configuration (25,38) aptes à associer matériellement l'interface d'entrée a un concentrateur prédéterminé.

11. Système selon l'une quelconque des revendications 6 à 11, dans lequel ladite interface d'entrée comporte une fonction interne de comptage, par exemple de l'énergie électrique, et est agencée pour transmettre aussi par courants porteurs les informations relatives à ladite fonction interne de comptage.

12. Système selon l'une quelconque des revendications 6 à 10, dans lequel ladite interface d'entrée comporte une fonction interne de comptage, par exemple de l'énergie électrique, ne comporte pas de sortie bus de téléreport, et est agencée pour transmettre aussi par courants porteurs les informations relatives à ladite fonction interne de comptage.

## Claims

1. Coupling circuit for an interface for a system for transmitting information by carrier currents, comprising:
- an emission amplifier (39) and
- a secondary circuit (43) of a coupling transformer (42, 50) connected in parallel to an electrical energy line,
the circuit comprises, in series with the emission amplifier and the primary circuit of the transformer,
- a capacitor (40, 51) and substantially no resistance,
- the primary/secondary transformation ratio of the transformer being greater than or equal to 3, in particular around 4:
the circuit comprises:
- a resistor (47) having one of its terminals connected between the output of the emission amplifier and the capacitor and its other terminal connected to earth, the reception circuit (48) of the coupling circuit having its input at the point common to the output of the emission amplifier, the capacitor and said resistor.

2. Circuit according to claim 1, wherein said secondary circuit (63) of the coupling transformer (62) comprises three outputs, each of these outputs being connected in parallel to a phase (52, 53, 54) of a three-phase electrical energy line with respect to the common point connected to neutral (45).

3. Circuit according to claim 1, comprising three coupling transformers (50), the secondary circuit of each coupling transformer being connected in parallel to a phase (52, 53, 54) of a three-phase electrical energy line with respect to the common point connected to neutral (45).

4. Circuit according to claim 3, comprising a capacitor (51) in series with the emission amplifier and the primary circuit of each of the coupling transformers.

5. Remote-reading system for metering equipment, **characterised by** the fact that it comprises:
- at least one remote-transfer bus (6) to which at least one item of equipment (4, 5) for reading is connected, to transmit information relating to said equipment by means of said bus;
- an input interface (7) between said remote-transfer bus and an electrical energy line (11), said interface comprising a first coupling circuit (18) for transmitting said information by carrier currents over said electrical energy line;
- a concentrator (14) comprising a second coupling circuit (26, 26') for connection thereof to the electrical energy line and at least one output interface (34, 37) for recovering said information;
- said concentrator being arranged to receive and store said information in the form of simulated equipment (4') and input interfaces (7', 10') corresponding to the real equipment and interfaces of the system, a simulated remote-transfer bus (61) connecting said simulated equipment and input interfaces to said output interface;
- at least one of said first and second coupling circuits being in accordance with any one of claims 1 to 4.

6. System according to claim 5, wherein said output interface is a remote-transfer bus interface.

7. System according to claim 5, wherein said output interface is a telephone network interface.

8. System according to claim 5, wherein said output interface is an Ethernet LAN network interface.

9. System according to any one of claims 6 to 9, wherein the concentrator is arranged in order, when it is installed, to detect the input interfaces present on said electrical energy line and the equipment connected to the remote-transfer bus of these interfaces, and to create the corresponding simulated equipment and interfaces.

10. System according to any one of claims 6 to 10, wherein said input interface and said concentrator comprise configuration switches (25, 38) able to physically associate the input interface with a predetermined concentrator.

11. System according to any one of claims 6 to 11, wherein said input interface comprises an internal metering function, for example for electrical energy, and is arranged also to transmit by carrier current the information relating to said internal metering function.

12. System according to any one of claims 6 to 10, wherein said input interface comprises an internal metering function, for example for electrical energy, does not comprise any remote-transfer bus output, and is arranged to transmit also by carrier current the information relating to said internal metering function.

## Patentansprüche

1. Koppelschaltung für Schnittstellen von Systemen zur Übertragung von Informationen über Trägerströme, umfassend:
- einen Sendeverstärker (39) und
- eine sekundäre Schaltung (43) eines Kopplungstransformator (42, 50), der auf einer elektrischen Energieleitung parallel geschaltet ist,
wobei die Schaltung in Reihe mit dem Sendeverstärker und der primären Schaltung des Transformators Folgendes umfasst:
- einen Kondensator (40, 51) und im Wesentlichen keinen Widerstand,
- wobei das primäre/sekundäre Wicklungsverhältnis des Transformators größer oder gleich drei ist, insbesondere ungefähr gleich vier;
wobei die Schaltung Folgendes umfasst:
- einen Widerstand (47), dessen eine Klemme zwischen dem Ausgang des Sendeverstärkers und dem Kondensator angeschlossen ist, und dessen andere Klemme an Masse angeschlossen ist, wobei die Empfangsschaltung (48) der Koppelschaltung ihren Eingang an dem Punkt aufweist, der dem Ausgang des Sendeverstärkers, dem Kondensator und dem Widerstand gemeinsam ist.

2. Schaltung nach Anspruch 1, wobei die sekundäre Schaltung (63) des Kopplungstransformators (62) drei Ausgänge umfasst, wobei jeder dieser Ausgänge auf einer Phase (52, 53, 54) einer elektrischen Energieleitung parallel geschaltet ist, die im Verhältnis zu dem gemeinsamen Punkt, der an den Nullleiter (45) angeschlossen ist, dreiphasig ist.

3. Schaltung nach Anspruch 1, umfassend drei Kopplungstransformatoren (50), wobei die sekundäre Schaltung jedes Kopplungstransformators auf einer Phase (52, 53, 54) einer elektrischen Energieleitung parallel geschaltet ist, die im Verhältnis zu dem gemeinsamen Punkt, der an den Nullleiter (45) angeschlossen ist, dreiphasig ist.

4. Schaltung nach Anspruch 3, umfassend einen Kondensator (51) in Reihe mit dem Sendeverstärker und der primären Schaltung jedes der Kopplungstransformatoren.

5. System zum Fernablesen von Zähleinrichtungen, **dadurch gekennzeichnet, dass** es Folgendes umfasst:
- mindestens einen Fernübertragungsbus (6), an den mindestens eine abzulesende Einrichtung (4, 5) angeschlossen ist, um über den Bus Informationen bezüglich der Einrichtung zu übertragen;
- eine Eingangsschnittstelle (7) zwischen dem Fernübertragungsbus und einer elektrischen Energieleitung (11), wobei die Schnittstelle eine erste Kopplungsschaltung (18) umfasst, um über Trägerströme die Informationen über die elektrische Energieleitung zu übertragen;
- einen Konzentrator (14), der eine zweite Koppelschaltung (26, 26') für seinen Anschluss an die elektrische Energieleitung und mindestens eine Ausgangsschnittstelle (34, 37) zur Wiedergewinnung der Informationen umfasst;
- wobei der Konzentrator angeordnet ist, um die Informationen in Form von simulierten Einrichtungen (4') und Eingangsschnittstellen (7', 10') zu empfangen und zu speichern, die den tatsächlichen Einrichtungen und Schnittstellen des Systems entsprechen, wobei ein simulierter Fernübertragungsbus (61) die simulierten Einrichtungen und Eingangsschnittstellen mit der Ausgangsschnittstelle verbindet;
- wobei mindestens eine der ersten und zweiten Koppelschaltungen gemäß einem der Ansprüche 1 bis 4 ist.

6. System nach Anspruch 5, wobei die Ausgangsschnittstelle eine Schnittstelle eines Fernübertragungsbusses ist.

7. System nach Anspruch 5, wobei die Ausgangsschnittstelle eine Schnittstelle eines Telefonnetzes ist.

8. System nach Anspruch 5, wobei die Ausgangsschnittstelle eine Schnittstelle eines Ethernet-LAN-Netzwerks ist.

9. System nach einem der Ansprüche 6 bis 9, wobei der Konzentrator angeordnet ist, um bei seiner Installation die Eingangsschnittstellen zu erfassen, die auf der elektrischen Energieleitung vorliegen, und die Einrichtungen, die an die Fernübertragungsbusse dieser Schnittstellen angeschlossen sind, und um die entsprechenden simulierten Einrichtungen und Schnittstellen zu erstellen.

10. System nach einem der Ansprüche 6 bis 10, wobei die Eingangsschnittstelle und der Konzentrator Konfigurationsschalter (25, 38) umfassen, die dazu geeignet sind, die Eingangsschnittstelle materiell mit einem vorherbestimmten Konzentrator zu verknüpfen.

11. System nach einem der Ansprüche 6 bis 11, wobei die Eingangsschnittstelle eine interne Zählfunktion umfasst, z.B. für elektrische Energie, und angeordnet ist, um ebenfalls über Trägerströme die Informationen bezüglich der internen Zählfunktion zu übertragen.

12. System nach einem der Ansprüche 6 bis 10, wobei die Eingangsschnittstelle eine interne Zählfunktion umfasst, z.B. für elektrische Energie, keinen Fernübertragungsbusausgang umfasst und angeordnet ist, um ebenfalls über Trägerströme die Informationen bezüglich der internen Zählfunktion zu übertragen.
